# EUROPÄISCHE PATENTSCHRIFT

(11) **EP 2 024 074 B1**
(45) Veröffentlichungstag und Bekanntmachung des Hinweises auf die Patenterteilung: **03.03.2010**
(21) Anmeldenummer: 07720143.2
(22) Anmeldetag: 11.05.2007
(51) Int. Cl.: B01J 4/00

(54) **UMSETZUNG EXPLOSIONSFÄHIGER GASGEMISCHE**
CONVERSION OF EXPLOSIVE GAS MIXTURES
RÉACTION DE MÉLANGES GAZEUX POTENTIELLEMENT EXPLOSIFS

(30) Priorität: 14.05.2006 CH 7772006
(43) Veröffentlichungstag der Anmeldung: 18.02.2009
(73) Patentinhaber: Christ Water Technology AG, 5310 Mondsee (AT)
(72) Erfinder: MENZEL, Thomas, CH-4148 Pfeffingen (CH); KOLIOS, Grigorios, 79540 Lörrach (DE); BISSEN, Monique, A-5310 Mondsee (AT); JOHANN, Jürgen, 69226 Nussloch (DE)
(74) Vertreter: Bohest AG
(86) Internationale Anmeldenummer: PCT/CH2007/000246
(87) Internationale Veröffentlichungsnummer: WO 2007/131380

(56) Entgegenhaltungen:
- GB-A- 939 120
- US-A1- 2004 223 904

## Beschreibung

Die vorliegende Erfindung bezieht sich auf die kontrollierte Umsetzung zündfähiger und/oder explosionsfähiger Gasgemische, insbesondere auf ein Verfahren zur kontrollierten Umsetzung derartiger Gasgemische, hierfür geeignete Vorrichtungen sowie auf spezielle Verwendungen derartiger Vorrichtungen.

Bei der Durchführung chemischer Prozesse tritt vielfach das Problem auf, dass Gasgemische kontrolliert zur Reaktion gebracht werden sollen, deren Umsetzung bei Vorliegen bestimmter kritischer Parameter, wie beispielsweise Zusammensetzung, Temperatur oder Geometrie des Reaktionsraumes zur Explosion des Gemisches führen können.

Beispielsweise entstehen in elektrochemischen Prozessen, die in wässerigen, Medien durchgeführt werden, an den Elektroden durch Wasserspaltung häufig elementarer Wasserstoff und Sauerstoff, die sich auf den Prozessverlauf vielfach negativ auswirken und deshalb entfernt werden müssen. So würde z. B. beim Betrieb von Elektrodeionisationsmodulen das an Kathode und Anode ständig gebildete Wasserstoff- bzw. Sauerstoffgas als Isolator zwischen den Elektroden wirken und den Prozess somit nachhaltig stören. Aus diesem Grund ist es erforderlich, das an den Elektroden jeweils gebildete Gas ständig von den Elektrodenoberflächen zu entfernen, was im allgemeinen durch Spülung der Elektroden mit einer inerten Flüssigkeit wie Wasser erfolgt. Aus ökologischen und ökonomischen Gründen erfolgt die Spülung der Elektroden in der Praxis üblicherweise nicht getrennt sondern sequentiell und unter Rückführung der Spülflüssigkeit. Ein Gemisch beider Gase liegt somit nach der Spülung in der Flüssigkeit dispergiert vor und das in annähernd stöchiometrischem Verhältnis, sodass bei der vor Rückführung der Spülflüssigkeit zu den Elektroden erforderlichen Entgasung der Trägerflüssigkeit ein hochexplosives Knallgasgemisch anfällt.

Da es bisher in der Praxis vielfach als zu gefährlich angesehen wird, das Knallgas direkt zur Reaktion zu bringen, um es unschädlich zu machen, muss gemäß dem aktuellen Stand der Technik nach der Entgasung der Trägerflüssigkeit beispielsweise eine aufwendige Ventilation oder eine Verdünnung des Knallgasgemisches mit großen Mengen an Inertgas vorgesehen werden, um eine kritische Akkumulation des Knallgasgemisches im Abgasstrom zu vermeiden. Diese Vorkehrungen zur sicheren Entsorgung des Gases erhöhen sowohl den Installationsaufwand als auch die Betriebskosten von derartigen Anlagen nicht unerheblich.

Ähnliche Probleme wie bei elektrochemischen Prozessen treten aber auch bei anderen chemischen Prozessen auf, z. B. bei der grosstechnischen Durchführung von Oxidationsreaktionen, wie partiellen Oxidationen, wo vielfach explosive Gasgemische als Edukte zum Einsatz kommen.

Die vorliegende Erfindung hat es sich daher zur Aufgabe gemacht, eine Umsetzung zündfähiger und/oder explosiver Gasgemische zu vereinfachen, insbesondere ein Verfahren sowie eine Vorrichtung zur Verfügung zu stellen, die eine sichere Umsetzung derartiger Gasgemische in einfacher und ökonomischer Weise ermöglichen, beispielsweise also die gefahrlose Entsorgung zündfähiger und/oder explosiver Gasgemische die bei Durchführung chemischer Verfahren anfallen, unter Bildung chemisch harmloser Verbindungen erlauben.

Diese Aufgabe wird erfindungsgemäss gelöst durch die Bereitstellung eines Verfahrens zur kontrollierten Umsetzung von mindestens zwei Gasen, die miteinander zündfähige und/oder explosive Gemische bilden, bei dem man die Gase entweder getrennt oder gemeinsam in einer in Bezug auf die Gase inerten Trägerflüssigkeit aufnimmt; die Trägerflüssigkeit mit den aufgenommenen Gasen einem Entgaser zuführt, der einen geschlossenen Entgasungstopf (2) umfasst, der mindestens eine Zuleitung für die gasbeladene Trägerflüssigkeit (1) und mindestens eine Gasabführung (3) an seinem oberen Ende sowie einen oder mehrere Abflüsse für die Trägerflüssigkeit unterhalb der Zuleitung(en) für die Trägerflüssigkeit und jeweils verbunden mit einem Abflussrohr (4) enthält, und zwar in einer Weise, dass die Flüssigkeitsgeschwindigkeit im Entgasungstopf (2) kleiner als 0.2 m/s ist, das Gasgemisch in dem Entgaser von der Trägerflüssigkeit abtrennt und nach Austritt aus dem Entgaser und gegebenenfalls erfolgter Trocknung in einer Reaktionszone zur Reaktion bringt; das dadurch gekennzeichnet ist, dass die Abflussrohre (4) bis zu einem Höhenniveau zwischen dem Austrittsquerschnitt der Gasabführung aus dem Entgasungstopf (2) und dem untersten Niveau der Reaktionszone als geschlossene Steigleitung ausgebildet sind und in diesem Niveaubereich ein Druckausgleich zwischen Gasabführung (3) und Abflussrohren (4) erfolgt.

Einen anderen Aspekt der vorliegenden Erfindung bildet eine Vorrichtung zur kombinierten Entfernung von mindestens zwei Gasen, die miteinander zündfähige und/oder explosive Gemische bilden, aus einer in Bezug auf die Gase inerten Trägerflüssigkeit und kontrollierter Abreaktion dieser Gase miteinander, enthaltend einen geschlossenen Entgasungstopf (2), der mindestens eine Zuleitung für die gasbeladene Trägerflüssigkeit (1) und mindestens eine Gasabführung (3) an seinem oberen Ende, die mit einer Reaktionszone verbunden ist, die eine aktive Zündvorrichtung für das Gasgemisch enthält und/oder eine katalytisch aktive Zone (6) zur Umsetzung der aus der Trägerflüssigkeit abgetrennten Gase aufweist, sowie einen oder mehrere Abflüsse für die Trägerflüssigkeit unterhalb der Zuleitung für die Trägerflüssigkeit und jeweils verbunden mit einem Abflussrohr (4) enthält, die dadurch gekennzeichnet ist, dass die Abflussrohre (4) bis zu einem Höhenniveau zwischen dem Austrittsquerschnitt der Gasabführung aus dem Entgasungstopf (2) und dem untersten Niveau der Reaktionszone als geschlossene Steigleitung ausgebildet sind und in diesem Niveaubereich ein Druckausgleich zwischen Gasabführung (3) und Abflussrohren (4) erfolgt.

Dadurch dass die Abflussrohre (4) als geschlossene Steigleitung bis zu einem Höhenniveau zwischen dem Austrittsquerschnitt der Gasabführung aus dem Entgasungstopf (2) und dem untersten Niveau der Reaktionszone ausgebildet sind und an dieser Stelle der Druckausgleich zwischen Gasabführung (3) und Abflussrohren (4) erfolgt, wird in einfacher aber sicherer Weise vermieden, dass sich im oberen Bereich des Entgasungstopfes (2) ein temporäres oder permanentes explosives Gaspolster bildet, ein an sich prinzipbedingtes Merkmal von herkömmlichen Entgasern. Es hat sich nämlich unerwarteterweise gezeigt, dass es zu keinen Explosionen kommt, wenn derartige Gaspolster im Entgaser vermieden werden. Erfindungsgemäss können somit Explosionen in der Anlage vermieden werden, auch wenn es einmal zu einem Rückschlag der Flammfront aus der Reaktionszone aufgrund einer sich plötzlich verringernden Geschwindigkeit der Abgasströmung kommt.
Figur I zeigt eine Ausführungsform der Vorrichtungen gemäss der vorliegenden Erfindung.
Figur II zeigt eine andere Ausführungsform einer erfindungsgemässen Vorrichtung mit mehreren Abgasrohren, die im weiteren Verlauf einen Rohrreaktor bilden.

Gemäss der vorliegenden Erfindung tritt beispielsweise ein Wasserstrom als inerte Trägerflüssigkeit, der z. B. mit einem Gemisch aus Wasserstoff und Sauerstoff von zündfähiger und/oder explosiver Stöchiometrie beladen ist, durch die Zuleitung (1) in den Entgasungstopf (2) ein. Darin trennt sich das Knallgasgemisch von der Flüssigkeit und steigt nach oben in ein Abgasrohr (3). Im Abgasrohr wird zunächst im unteren Bereich mitgerissene Flüssigkeit abgeschieden und anschliessend an diesen Bereich die erwünschte chemische Umsetzung des Gases durchgeführt. Bei dieser Ausführungsform entlässt das Abgasrohr schliesslich den so behandelten Abgasstrom ins Freie. Die entgaste Flüssigkeit tritt nach unten aus dem Entgasungstopf (2) aus und wird durch ein hier beispielsweise siphonförmig ausgebildetes Steigrohr als Abflussrohr (4) geführt. Diese Leitung hat Kontakt zur Umgebung an ihrem Auslauf (5), der sich auf einem Niveau befindet, das mindestens auf derselben Höhe wie das obere Ende des Entgasers aber tiefer als unterste Niveau der Reaktionszone (6) in der Gasabführung (3) liegt. Über die Umgebung erfolgt in Höhe des Auslaufes (5) auf Seite des Abflusses der Druckausgleich mit der Gasabführung (3), die ebenfalls offen zur Umgebung ist, sodass sich gasseitig dasselbe Flüssigkeitsniveau wie im Abflussrohr für die Trägerflüssigkeit einstellt und es weder zu einer Bildung eines Gaspolsters im Entgaser noch zu einer Flutung der Reaktionszone kommt.

Ein Druckausgleich zwischen Gasabführung (3) und Abflussrohr (4) für die Trägerflüssigkeit kann auch mit Hilfe einer Druckausgleichsleitung zwischen Gasabführung (3) und Abflussrohren (4), beispielsweise wenn die Vorrichtung unter Überdruck betrieben werden soll. Mit der Gasabführung (3) sollte diese Druckausgleichsleitung an einer Stelle verbunden sein, die gasseitig hinter der Reaktionszone liegt, wo das zündfähige und/oder explosive Gasgemisch zur Reaktion gebracht wird, damit kein zündfähiges Gas in den Flüssigkeitsablauf geraten kann.

Die Wirkung des Entgasungstopfes (2) beruht hauptsächlich auf einer Beruhigung der Strömung der gasbeladenen Trägerflüssigkeit, wodurch eine effektive Auftriebsbewegung der Gasblasen zugelassen wird. Es kann zwar auch ein leerer Behälter mit ausreichend großem Querschnitt eingesetzt werden, jedoch können damit feine Blasenanteile mit einem Blasendurchmesser sehr viel kleiner 1 mm nur schlecht abgetrennt werden. Die Wirksamkeit des Entgasers kann aber durch Einbauten mit hoher spezifischer Oberfäche stark verbessert werden. Solche Einbauten können z. B. eine regellose Schüttung von gegen die Trägerflüssigkeit inertem Bruch, Hohlzylinder oder Kugeln, beispielsweise aus Keramik, mit einem Partikeldurchmesser von 0.1 mm bis 10 mm, oder eine geordnete Packung aus gekreuzten oder gewellten Strukturen aus Edelstahl oder ähnlichem oder eine Packung aus Edelstahldrahtgewebe mit einem Drahtdurchmesser von 0.05 bis 1 mm sein.

Vorzugsweise ist die Flüssigkeitsgeschwindigkeit im Entgasungstopf (2) noch kleiner als oben angegeben, beispielsweise kleiner als 0.1 m/s, bevorzugt, 0.05 m/s oder niedriger.

Erfindungsgemässe Vorrichtungen können je nach Bedarf und Gasbelastung einen oder mehrere Zuleitungen für die gasbeladene Trägerflüssigkeit (1), eine oder mehrere Gasabführungen (3) und einen oder mehrere Abflüsse für die gasfreie Trägerflüssigkeit aus dem Entgasungstopf aufweisen.

Vorzugsweise werden, wie oben bereits beschrieben, bei dem Verfahren bzw. der Vorrichtung gemäss der vorliegenden Erfindung einer oder mehrere als Siphon geformte Steigleitungen als Abflüsse (4) verwendet, durch die die im wesentlichen gasfreie Trägerflüssigkeit aus dem Entgasungstopf (2) ausgeleitet wird, wobei der Auslauf ins Freie (5) des oder der genannten Abflüsse (4) auf dem Niveau des oberen Endes des Entgasungstopfes (2) oder höher liegen.

Der Querschnitt des Auslaufs sollte so gewählt werden, dass der dynamische Druck gegenüber dem statischen Druck vernachlässigt werden kann. Dadurch wird nach dem Prinzip der kommunizierenden Behälter sichergestellt, dass der Entgaser stets vollständig mit Flüssigkeit gefüllt ist. Vorzugsweise beträgt der strömungsbedingte Druckabfall zwischen Zulauf zum Entgasungstopf (2) und gasseitigen oder flüssigkeitsseitigen Ablauf weniger als 10 mbar, bevorzugt weniger als 1 mbar.

Bei einer speziellen Ausführungsform der erfindungsgemässen Vorrichtung haben Entgasungstopf (2) und Abfluss für die i.w. gasfreie Trägerflüssigkeit konzentrische Anordnung.

Die zündfähigen und/oder explosiven Gasgemische, die im Entgasungstopf (2) abgetrennt werden, werden vorzugsweise kontrolliert verbrannt, insbesondere mit Katalysatorunterstützung. Dies kann beispielsweise direkt in einer als Rohrreaktor ausgestalteten Zone des Abgasrohrs (6) erfolgen, worin sich ein geeigneter Oxidationskatalysator, beispielsweise auf Basis von Pt, Pd, Rh, Ag oder Cu in Form eines Festbettes oder einer entsprechenden Beschichtung der Rohrinnenwand befindet. Voraussetzung für den vollständigen Ablauf der Reaktion ist jedoch vielfach die Einhaltung einer geeigneten Katalysator-temperatur. Hierzu sollte das reaktive Gasgemisch möglichst trocken sein. Gegebenenfalls muss die katalytisch aktive Reaktionszone (6) ausserdem durch eine Begleitheizung auf dem erforderlichen Temperaturniveau gehalten werden. Bei starker Exothermie der Reaktion in der Reaktionszone (6) kann aber umgekehrt auch der Fall eintreten, dass die Reaktionszone gekühlt werden muss.

Wird ein in dieser Weise ausgestalteter Rohrreaktor in fachmännischer Weise ausgelegt, bietet er optimale Voraussetzungen für den kontrollierten Ablauf der Umsetzung, insbesondere eine ausreichend hohe Strömungsgeschwindigkeit. Ausserdem kann z. B. durch eine geeignet gewählte Rohrgeometrie die Menge an zündfähigem Gas im Reaktionsraum so gering gehalten werden, dass selbst die Auswirkungen einer gelegentlichen auftretenden Verpuffung im Rohr harmlos bleiben.

Bei einer bevorzugten Ausführungsform des erfindungsgemässen Verfahrens durchläuft demnach das abgetrennte Gasgemisch eine katalytisch aktive Zone (6) im Abgasrohr und wird dort katalytisch zur Reaktion gebracht. Die Gasabführung besteht hierbei beispielsweise aus einem oder mehreren Abgasrohren (3), die jeweils eine katalytisch aktive Zone (6) aufweisen sowie davor in unmittelbarer Fortsetzung des Entgasers eine katalytisch inerte Zone aufweisen können, da in der Auftriebsströmung der Gasblasen meist auch Flüssigkeit in das Abgasrohr mitgeschleppt wird, so dass der Flüssigkeitsspiegel darin häufig sogar oberhalb des oberen Endes des Entgasungstopfes liegt.

Obwohl die genannte katalytisch inerte Zone in den Abgasrohren einfach leer sein kann, enthält sie vorzugsweise eine gasdurchlässige Festkörperfüllung, die als Tropfenabscheider für das abgetrennte Gasgemisch wirkt. Das Gasgemisch wird hierin einer Trocknung unterworfen. Die zur Tropfenabscheidung leer gelassene oder vorzugsweise mit einer geeigneten Festkörperfüllung gefüllte Zone der Abgasrohre bildet zudem eine geeignete Flammbarriere, die die Ausbreitung einer Verbrennungszone in den Entgasungstopf zusätzlich erschwert.

Zur Tropfenabscheidung geeignete Festkörperfüllungen umfassen z. B. eine regellose Schüttung von Partikeln aus anorganischem Material, beispielsweise Bruch, Hohlzylinder oder Kugeln aus keramischem Material wie z.B. alpha-Al₂O₃, Cordierit, Mullit oder Steatit usw. mit einem Partikeldurchmesser von 0.1 mm bis 10 mm, eine geordnete Packung aus gekreuzten oder gewellten Strukturen aus Edelstahl ähnlichem oder eine Packung aus Edelstahldrahtgewebe mit einem Drahtdurchmesser von 0,05 mm bis 1 mm, wobei die Wirksamkeit in dieser Reihenfolge steigt.

Wie oben bereits ausgeführt, lässt sich das erfindungsgemässe Verfahren sehr gut für die kontrollierte Abreaktion von Knallgasgemischen einsetzen, bei einer bevorzugten Ausführungsform des erfindungsgemässen Verfahrens handelt es sich demnach bei den umzusetzenden Gasen um Wasserstoff und Sauerstoff , die in einem zündfähigen und/oder explosiven stöchiometrischen Verhältnis vorliegen.

Vorzugsweise wird zu deren Umsetzung in an sich bekannter Weise ein Katalysator wie z. B. Pt, Pd, Rh, Ag oder Cu, insbesondere Pt, in der katalytisch aktiven Zone (6) verwendet. Dies kann z. B. dadurch geschehen, dass die Gasabführungsrohre zumindest im Bereich der katalytisch aktive Zone (6) aus Edelstahl bestehen, das innen mit einem Katalysator wie oben angeführt, insbesondere mit Pt beschichtet ist. Man kann aber auch eine Packung von einem der genannten Katalysatoren enthaltenden Füllkörpern in der katalytisch aktive Zonen (6) der Gasabführung einsetzen, vorzugsweise eine regellose Schüttung von mit einem der oben genannten Edelmetalle, insbesondere mit Platin beschichteten Füllkörpern, insbesondere Kugeln, Voll- oder Hohlzylinder mit einem Durchmesser von 0.1 bis 10 mm, beispielsweise aus keramischem Material wie Aluminiumoxid oder ähnlichem oder mit in der genannten Weise beschichteten Folien aus Edelstahl.

Vorzugsweise enthalten die Vorrichtungen gemäss der vorliegenden Erfindung im Bereich der katalytisch aktiven Zone (6) eine Vorrichtung zur Thermostatisierung (7) dieser Zone, d.h. zu ihrer Kühlung und/oder Erwärmung, um die in der Zone ablaufende katalytische Reaktion zusätzlich steuern zu können.

Die Geometrie eines Abgasrohres der erfindungsgemässen Vorrichtungen und die Verweilzeit der Gase in der katalytisch aktiven Zone (6) sollte im allgemeinen so gewählt werden, dass im katalytisch aktiven Bereich des Abgasrohres: der Rohrinnendurchmesser kleiner als 30 mm, bevorzugt kleiner als 12 mm und die Wandstärke des Rohres kleiner als 10 mm, bevorzugt kleiner als 2 mm sind, und die Verweilzeit des Gasstroms in der katalytisch aktiven Zone von 0.01 bis 10 Sekunden, bevorzugt von 0.1 bis 1 Sekunde liegt. Die Strömungsgeschwindigkeit der Trägerflüssigkeit sollte im oben genannten Bereich liegen, ebenso der strömungsbedingte Druckabfall zwischen Zulauf und gas- bzw. flüssigkeitsseitigem Ablauf.

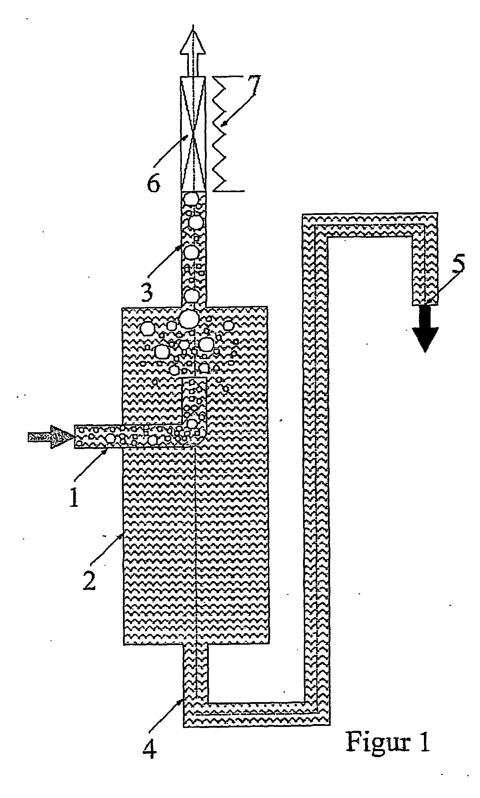

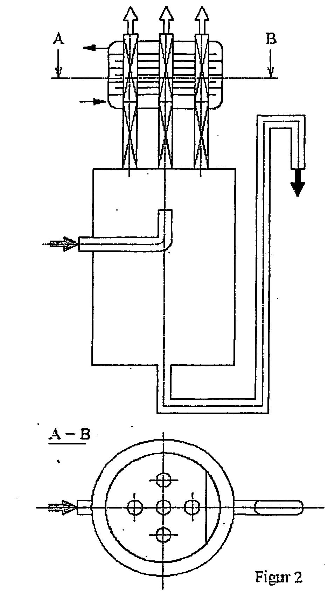

Eine besondere Ausführungsform der erfindungsgemässen Vorrichtung weist mehrere Gasabführungen auf, die gemeinsam in einen Rohrbündelreaktor führen, der vorzugsweise thermostatisierbar ist, beispielsweise mit Hilfe eines flüssigen Wärmeträgers, der aussen an den Reaktorrohren vorbeigeführt wird und diese gegebenenfalls kühlen und/oder erwärmen kann, wie in Figur 2 schematisch gezeigt.

Bei einer speziellen Ausführungsform des erfindungsgemässen Verfahrens wird die i. w. gasfreie Trägerflüssigkeit zur Aufnahme weiteren Gases zurück- bzw. im Kreislauf geführt, was besonders ökonomisch insbesondere bei der Entsorgung explosiver Neben- oder Abfallprodukte von chemischen Prozessen ist.

Das erfindungsgemässe Verfahren und die erfindungsgemässen Vorrichtungen können überall dort eingesetzt werden, wo zündfähige und/oder explosive Gasgemische in kontrollierter Weise umgesetzt werden müssen, beispielweise zur Entgasung des Konzentrates von Elektrodeionisationsmodulen oder zur Vermischung und anschliessender Umsetzung zündfähiger und/oder explosiver Mischungen von Gasen. Ein weiteres Anwendungsgebiet sind Dampfgeneratoren, insbesondere Reinstdampfgeneratoren, bei denen Reinstwasserstoff mit Reinstsauerstoff zur Umsetzung gebracht wird.

## Patentansprüche

1. Verfahren zur kontrollierten Umsetzung von mindestens zwei Gasen, die miteinander zündfähige und/oder explosive Gemische bilden, bei dem man die Gase entweder getrennt oder gemeinsam in einer in Bezug auf die Gase inerten Trägerflüssigkeit aufnimmt;
die Trägerflüssigkeit mit den aufgenommenen Gasen einem Entgaser zuführt, der einen geschlossenen Entgasungstopf (2) umfasst, der mindestens eine Zuleitung für die gasbeladene Trägerflüssigkeit (1) und mindestens eine Gasabführung (3) an seinem oberen Ende sowie einen oder mehrere Abflüsse für die Trägerflüssigkeit unterhalb der Zuleitung für die Trägerflüssigkeit und jeweils verbunden mit einem Abflussrohr (4) enthält, und zwar in einer Weise, dass die Flüssigkeitsgeschwindigkeit im Entgasungstopf (2) kleiner als 0.2 m/s ist, das Gasgemisch in dem Entgaser von der Trägerflüssigkeit abtrennt und nach Austritt aus dem Entgaser und gegebenenfalls erfolgter Trocknung in einer Reaktionszone zur Reaktion bringt;
**dadurch gekennzeichnet, dass**
die Abflussrohre (4) bis zu einem Höhenniveau zwischen dem Austrittsquerschnitt der Gasabführung aus dem Entgasungstopf (2) und dem untersten Niveau der Reaktionszone als geschlossene Steigleitung ausgebildet sind und in diesem Niveaubereich ein Druckausgleich zwischen Gasabführung (3) und Abflussrohren (4) erfolgt.

2. Verfahren nach Anspruch 1, **dadurch gekennzeichnet, dass** die im wesentlichen gasfreie Trägerflüssigkeit durch als Siphon geformte Steigleitungen als Abflüsse (4) geleitet wird, deren Auslauf ins Freie (5) auf dem Niveau des oberen Endes des Entgasungstopfes (2) oder höher liegen.

3. Verfahren nach einem der Ansprüche 1 oder 2, **dadurch gekennzeichnet, dass** das abgetrennte Gasgemisch, gegebenenfalls mit Katalysatorunterstützung, kontrolliert verbrannt wird.

4. Verfahren nach einem der Ansprüche 1 bis 3, **dadurch gekennzeichnet, dass** das abgetrennte Gasgemisch eine katalytisch aktive Zone (6) durchläuft und dort katalytisch zur Reaktion gebracht wird.

5. Verfahren nach einem der Ansprüche 1 bis 4, **dadurch gekennzeichnet, dass** das abgetrennte Gasgemisch einer Tropfenabscheidung zur Trocknung unterworfen wird, die sich unmittelbar an den Austritt des Gasgemisches aus dem Entgasungstopf anschliesst.

6. Verfahren nach Anspruch 5, **dadurch gekennzeichnet, dass** zur Tropfenabscheidung der sich unmittelbar an den Austritt der Gasabführung (3) aus dem Entgasungstopf (2) anschliessende Teil der Gasabführung verwendet wird, der entweder leer ist oder bevorzugt mit einer zur Tropfenabscheidung geeigneten Festkörperfüllung gefüllt ist.

7. Verfahren nach Anspruch 6, **dadurch gekennzeichnet, dass** die Festkörperfüllung aus einer regellosen Schüttung von Partikeln aus anorganischem Material mit einem Partikeldurchmesser von 0.1 mm bis 10 mm, einer geordneten Packung aus gekreuzten oder gewellten Strukturen aus Edelstahl oder einer Packung aus Edelstahldrahtgewebe mit einem Drahtdurchmesser von 0.05 mm bis 1 mm besteht.

8. Verfahren nach einem der Ansprüche 4 bis 7, **dadurch gekennzeichnet, dass** Flüssigkeitsgeschwindigkeit im Entgasungstopf (2) kleiner als 0.1 m/s, bevorzugt 0.05 m/s oder niedriger ist.

9. Verfahren nach einem der Ansprüche 1 bis 8, **dadurch gekennzeichnet, dass** der strömungsbedingte Druckabfall zwischen Zulauf zum Entgasungstopf (2) und gasseitigen oder flüssigkeitsseitigen Ablauf weniger als 10 mbar, bevorzugt weniger als 1 mbar beträgt.

10. Verfahren nach einem der Ansprüche 1 bis 9, **dadurch gekennzeichnet, dass** Verweilzeit des Gasstroms in der katalytisch aktiven Zone (6) von 001 bis 10 Sekunden, bevorzugt von 0.1 bis 1 Sekunde beträgt.

11. Verfahren nach einem der Ansprüche 1 bis 10, **dadurch gekennzeichnet, dass** es sich bei den mindestens zwei Gasen um Wasserstoff und Sauerstoff handelt, die in zündfähigen und/oder explosiven stöchiometrischen Verhältnis vorliegen.

12. Verfahren nach Anspruch 11, **dadurch gekennzeichnet, dass** in der katalytisch aktiven Zone (6) ein Katalysator wie Pt, Pd, Rh, Ag oder Cu verwendet wird, um das Gemisch aus Wasserstoff und Sauerstoff zur Reaktion zu bringen.

13. Verfahren nach Anspruch 12, **dadurch gekennzeichnet, dass** als katalytisch aktive Zone (6) innen mit einem Katalysator wie Pt, Pd, Rh, Ag oder Cu beschichtete Edelstahlrohre in der Gasabführung dienen.

14. Verfahren nach Anspruch 12, **dadurch gekennzeichnet, dass** als katalytisch aktive Zone (6) eine Packung von einen einem Katalysator wie Pt, Pd, Rh, Ag oder Cu enthaltenden Füllkörpern in der Gasabführung eingesetzt wird.

15. Verfahren nach Anspruch 14, **dadurch gekennzeichnet, dass** die Packung aus einer regellose Schüttung von mit Pt, Pd, Rh, Ag oder Cu beschichteten Füllkörpern, insbesondere Kugeln, Voll- oder Hohlzylindern mit einem Durchmesser von 0.1 bis 10 mm; oder aus mit Pt, Pd, Rh, Ag oder Cu beschichteten Folien aus Edelstahl besteht.

16. Verfahren nach einem der Ansprüche 1 bis 15, **dadurch gekennzeichnet, dass** die i.w. gasfreie Trägerflüssigkeit zur Aufnahme weiteren Gases zurück- oder im Kreislauf geführt wird.

17. Vorrichtung zur kombinierten Entfernung von mindestens zwei Gasen, die miteinander zündfähige und/oder explosive Gemische bilden, aus einer in Bezug auf die Gase inerten Trägerflüssigkeit und kontrollierter Abreaktion dieser Gase miteinander, enthaltend:
einen geschlossenen Entgasungstopf (2), der mindestens eine Zuleitung für die gasbeladene Trägerflüssigkeit (1) und mindestens eine Gasabführung (3) an seinem oberen Ende, die mit einer Reaktionszone verbunden ist, die eine aktive Zündvorrichtung für das Gasgemisch enthält und/oder eine katalytisch aktive Zone (6) zur Umsetzung der aus der Trägerflüssigkeit abgetrennten Gase aufweist, sowie einen oder mehrere Abflüsse für die Trägerflüssigkeit unterhalb der Zuleitung für die Trägerflüssigkeit und jeweils verbunden mit einem Abflussrohr (4) enthält,
**dadurch gekennzeichnet, dass**
die Abflussrohre (4) bis zu einem Höhenniveau zwischen dem Austrittsquerschnitt der Gasabführung aus dem Entgasungstopf (2) und dem untersten Niveau der Reaktionszone als geschlossenen Steigleitung ausgebildet sind und in diesem Niveaubereich ein Druckausgleich zwischen Gasabführung (3) und Abflussrohren (4) erfolgt.

18. Vorrichtung nach Anspruch 17, **dadurch gekennzeichnet, dass** sie als Siphon geformte Steigleitungen als Abflüsse (4) aufweist, deren Auslauf ins Freie (5) auf dem Niveau des oberen Endes des Entgasungstopfes (2) oder höher liegen.

19. Vorrichtung nach einem der Ansprüche 17 oder 18, **dadurch gekennzeichnet, dass** der Entgasungstopf (2) und der Abfluss für die i.w. gasfreie Trägerflüssigkeit eine konzentrische Anordnung haben.

20. Vorrichtung nach einem der Ansprüche 17 bis 19, **dadurch gekennzeichnet, dass** die Gasabführung aus einem oder mehreren Abgasrohren (3) besteht, die jeweils eine katalytisch aktive Zone (6) sowie davor in unmittelbarer Fortsetzung des Entgasers eine katalytisch inerte Zone aufweisen.

21. Vorrichtung nach Anspruch 20, **dadurch gekennzeichnet, dass** die katalytisch inerte Zone in den Abgasrohren eine gasdurchlässige Festkörperfüllung enthält, die als Tropfenabscheider für das abgetrennte Gasgemisch wirkt, vorzugsweise eine Füllung gemäss Anspruch 7.

22. Vorrichtung nach einem der Ansprüche 17 bis 21, **dadurch gekennzeichnet, dass** die katalytisch aktive Zone (6) einen Pt-, Pd-, Rh-, Ag- oder Cu-Katalysator enthält.

23. Vorrichtung gemäss Anspruch 22, **dadurch gekennzeichnet, dass** der Katalysator aus einer regellosen Schüttung von mit Katalysator beschichteten Füllkörpern, insbesondere Kugeln, Voll- oder Hohlzylindern mit einem Durchmesser von 0.1 bis 10 mm, oder aus mit Katalysator beschichteten Folien aus Edelstahl besteht.

24. Vorrichtung gemäss Anspruch 23, **dadurch gekennzeichnet, dass** die katalytisch aktive Zone (6) eines Abgasrohres aus Edelstahlrohr besteht, dessen Innenseite mit Pt, Pd, Rh, Ag oder Cu beschichtet ist.

25. Vorrichtung gemäss einem der Ansprüche 17 bis 24, **dadurch gekennzeichnet, dass** sie im Bereich der katalytisch aktiven Zone (6) eine Vorrichtung zur Thermostatisierung (7) aufweist.

26. Vorrichtung gemäss einem der Ansprüche 17 bis 25, **dadurch gekennzeichnet, dass** der Entgasungstopf (2) Einbauten und/oder eine Füllung mit hoher spezifischer Oberfläche enthält.

27. Verwendung einer Vorrichtung gemäss den Ansprüchen 17 bis 26 zur Entgasung des Konzentrates von Elektrodeionisationsmodulen.

28. Verwendung einer Vorrichtung gemäss den Ansprüchen 17 bis 26 zur Vermischung und anschliessender Umsetzung zündfähiger und/oder explosiver Mischungen von Gasen.

29. Verwendung gemäss Anspruch 28 als Dampfgenerator, insbesondere als Reinstdampfgenerator.

## Claims

1. A method for the controlled conversion of at least two gases forming ignitable and/or explosive mixtures with one another, wherein the gases are absorbed either separately or together in a carrier liquid inert with respect to the gases;
the carrier liquid with the absorbed gases is fed to a degasser comprising a degassing vessel (2) comprising at least one feed line for the gas-loaded carrier liquid (1) and at least one gas discharge outlet (3) at its top and one or more drains for the carrier liquid below the feed line for the carrier liquid and a drain pipe (4) connected to each drain, and that in such a manner that the flow rate of the liquid in the degassing vessel (2) is less than 0.2 m/s, the gas mixture is separated from the carrier liquid in the degasser and, after exiting the degasser and optionally drying, is reacted in a reaction zone;
**characterized in that**
the drain pipes (4) are designed as a closed riser up to a height level between the exit cross section of the gas discharge outlet from the degassing vessel (2) and the lowest level of the reaction zone, and there is pressure compensation between gas discharge outlet (3) and drain pipes (4) in this level range.

2. The method according to claim 1, **characterized in that** the essentially gas-free carrier liquid is passed through siphon-shaped risers as drains (4), the discharge point to the atmosphere (5) of which is at the level of the top of the degassing vessel (2) or higher.

3. The method according to any one of claims 1 or 2, **characterized in that** the separated gas mixture is burnt in a controlled manner, optionally with catalyst support.

4. The method according to any one of claims 1 to 3, **characterized in that** the separated gas mixture passes through a catalytically active zone (6) and is catalytically reacted there.

5. The method according to any one of claims 1 to 4, **characterized in that** the separated gas mixture is subjected to droplet separation for drying, which immediately follows the exit of the gas mixture from the degassing vessel.

6. The method according to claim 5, **characterized in that** for droplet separation, the part of the gas discharge outlet immediately following the exit of the gas discharge outlet (3) from the degassing vessel (2) is used, which is either empty or preferably filled with a solid filling suitable for droplet separation.

7. The method according to claim 6, **characterized in that** the solid filling consists of a random packing of particles made of inorganic material having a particle diameter of 0.1 mm to 10 mm, an ordered packing of crossed or corrugated structures made of stainless steel, or a packing of stainless steel wire cloth having a wire diameter of 0.5 mm to 1 mm.

8. The method according to any one of claims 4 to 7, **characterized in that** the liquid flow rate in the degassing vessel (2) is less than 0.1 m/s, preferably 0.05 m/s or lower.

9. The method according to any one of claims 1 to 8, **characterized in that** the flow-induced drop in pressure between feed inlet into the degassing vessel (2) and gas-side or liquid-side discharge point is less than 10 mbar, preferably less than 1 mbar.

10. The method according to any one of claims 1 to 9, **characterized in that** the dwell time of the gas stream in the catalytically active zone (6) is 0.01 to 10 seconds, preferably 0.1 to 1 second.

11. The method according to any one of claims 1 to 10, **characterized in that** the at least two gases are hydrogen and oxygen, which are present in an ignitable and/or explosive stoichiometric ratio.

12. The method according to claim 11, **characterized in that** in the catalytically active zone (6), a catalyst such as Pt, Pd, Rh, Ag, or Cu is used in order to react the mixture of hydrogen and oxygen.

13. The method according to claim 12, **characterized in that** as catalytically active zone (6), stainless steel pipes, which are coated with a catalyst such as Pt, Pd, Rh, Ag, or Cu on the inside, in the gas discharge outlet are used.

14. The method according to claim 12, **characterized in that** as catalytically active zone (6), a packing of filler material, which contains a catalyst such as Pt, Pd, Rh, Ag, or Cu, in the gas discharge outlet is used.

15. The method according to claim 14, **characterized in that** the packing consists of a random packing of filler material coated with Pt, Pd, Rh, Ag, or Cu, in particular spheres, solid or hollow cylinders having a diameter of 0.1 to 10 mm; or films made of stainless steel coated with Pt, Pd, Rh, Ag, or Cu.

16. The method according to any one of claims 1 to 15, **characterized in that** the essentially gas-free carrier liquid is returned or recycled for absorption of further gas.

17. A device for the combined removal of at least two gases, which form ignitable and/or explosive mixtures with one another, from a carrier liquid inert with respect to the gases, and controlled reaction of these gases with one another comprising:
a closed degassing vessel (2) comprising at least one feed line for the gas-loaded carrier liquid (1) and, at its top, at least one gas discharge outlet (3) connected to a reaction zone comprising an ignition device for the gas mixture and/or a catalytically active zone (6) for reacting the gases separated from the carrier liquid, and one or more drains for the carrier liquid below the feed line for the carrier liquid and a drain pipe (4) connected to each drain,
**characterized in that**
the drain pipes (4) are designed as a closed riser up to a height level between the exit cross section of the gas discharge outlet from the degassing vessel (2) and the lowest level of the reaction zone, and there is pressure compensation between gas discharge outlet (3) and drain pipes (4) in this level range.

18. The device according to claim 17, **characterized in that** it has siphon-shaped risers as drains (4), the discharge point to the atmosphere (5) of which is at the level of the top of the degassing vessel (2) or higher.

19. The device according to any one of claims 17 or 18, **characterized in that** the degassing vessel (2) and the drain for the essentially gas-free carrier liquid have a concentric arrangement.

20. The device according to any one of claims 17 to 19, **characterized in that** the gas discharge outlet consists of one or more exhaust pipes (3), each comprising a catalytically active zone (6) and before it, immediately following the degasser, a catalytically inert zone.

21. The device according to claim 20, **characterized in that** the catalytically inert zone in the exhaust pipes contains a gas-permeable solid filling acting as droplet separator for the separated gas mixture, preferably a filling according to claim 7.

22. The device according to any one of claims 17 to 21, **characterized in that** the catalytically active zone (6) contains a Pt, Pd, Rh, Ag, or Cu catalyst.

23. The device according to claim 22, **characterized in that** the catalyst consists of a random packing of filler material coated with catalyst, in particular spheres, solid or hollow cylinders having a diameter of 0.1 to 10 mm, or a film made of stainless steel coated with catalyst.

24. The device according to claim 23, **characterized in that** the catalytically active zone (6) of an exhaust pipe consists of a stainless steel pipe, the inner surface of which is coated with Pt, Pd, Rh, Ag, or Cu.

25. The device according to any one of claims 17 to 24, **characterized in that** it comprises a device for thermostatting (7) in the region of the catalytically active zone (6).

26. The device according to any one of claims 17 to 25, **characterized in that** the degassing vessel (2) comprises internals and/or a filling having a high specific surface.

27. The use of a device according to claims 17 to 26 for degassing the concentrate of electrode ionization modules.

28. The use of a device according to claims 17 to 26 for mixing and subsequent reaction of ignitable and/or explosive mixtures of gases.

29. The use according to claim 28 as steam generator, in particular as steam generator for superclean steam.

## Revendications

1. Procédé pour la réaction contrôlée d'au moins deux gaz qui forment entre eux des mélanges inflammables et/ou explosifs, dans lequel on absorbe les gaz, soit séparément, soit ensemble, dans un liquide porteur inerte vis-à-vis des gaz ;
on envoie le liquide porteur avec les gaz absorbés à un dégazeur qui comprend un récipient de dégazage (2) fermé qui comporte au moins un conduit d'arrivée pour le liquide porteur (1) chargé de gaz et au moins un conduit d'évacuation de gaz (3) à son extrémité supérieure ainsi qu'un ou plusieurs conduits de sortie pour le liquide porteur au-dessous du conduit d'arrivée pour le liquide porteur et raccordés chacun à un tuyau de sortie (4), à savoir de manière que la vitesse du liquide dans le récipient de dégazage (2) soit inférieure à 0,2 m/s, le mélange de gaz est séparé du liquide porteur dans le dégazeur et, après sa sortie du dégazeur et éventuellement un séchage effectué, on le met en réaction dans une zone de réaction ;
**caractérisé en ce que**
les tuyaux de sortie (4) sont conçus sous forme de colonne montante fermée jusqu'à un niveau d'hauteur entre la section transversale de sortie du conduit d'évacuation de gaz hors du récipient de dégazage (2) et le niveau le plus bas de la zone de réaction, et dans cette zone de niveau s'effectue un équilibrage de pression entre le conduit d'évacuation de gaz (3) et les tuyaux de sortie (4).

2. Procédé selon la revendication 1, **caractérisé en ce que** le liquide porteur pratiquement exempt de gaz est conduit en tant qu'effluents (4) par des colonnes montantes en forme de siphon, dont l'évacuation à l'extérieur (5) se trouve au niveau de l'extrémité supérieure du récipient de dégazage (2) ou plus haut.

3. Procédé selon la revendication 1 ou 2, **caractérisé en ce que** le mélange de gaz séparé est brûlé de façon contrôlée, éventuellement à l'aide d'un catalyseur.

4. Procédé selon l'une quelconque des revendications 1 à 3, **caractérisé en ce que** le mélange de gaz séparé traverse une zone catalytiquement active (6) et y est mis en réaction par voie catalytique.

5. Procédé selon l'une quelconque des revendications 1 à 4, **caractérisé en ce que** le mélange de gaz séparé est soumis à une séparation de gouttes pour le séchage, qui fait immédiatement suite à la sortie du mélange de gaz hors du récipient de dégazage.

6. Procédé selon la revendication 5, **caractérisé en ce que** pour la séparation de gouttes on utilise la partie du conduit d'évacuation de gaz qui suit directement la sortie du conduit d'évacuation de gaz (3) hors du récipient de dégazage (2), qui soit est vide, soit, de préférence, est remplie d'un garnissage avec des corps solides appropriés à la séparation de gouttes.

7. Procédé selon la revendication 6, **caractérisé en ce que** le garnissage avec des corps solides consiste en un lit irrégulier de particules à base d'un matériau inorganique ayant un diamètre de particule de 0,1 mm à 10 mm, en un garnissage ordonné constitué de structures en croix ou ondulées en acier inoxydable ou en un garnissage constitué de toile métallique en fils d'acier inoxydable ayant un diamètre de fil de 0,05 mm à 1 mm.

8. Procédé selon l'une quelconque des revendications 4 à 7, **caractérisé en ce que** la vitesse du liquide dans le récipient de dégazage (2) est inférieure à 0,1 m/s, de préférence 0,05 m/s ou moins.

9. Procédé selon l'une quelconque des revendications 1 à 8, **caractérisé en ce que** la chute de pression due à l'écoulement entre introduction dans le récipient de dégazage (2) et évacuation du côté gaz ou du côté liquide est inférieure à 10 mbars, de préférence inférieure à 1 mbar.

10. Procédé selon l'une quelconque des revendications 1 à 9, **caractérisé en ce que** le temps de séjour du flux gazeux dans la zone à activité catalytique (6) va de 0,001 à 10 secondes, de préférence de 0,1 à 1 seconde.

11. Procédé selon l'une quelconque des revendications 1 à 10,
**caractérisé en ce que** quant auxdits au moins deux gaz il s'agit d'hydrogène et d'oxygène qui se trouvent en un rapport stoechiométrique inflammable et/ou explosif.

12. Procédé selon la revendication 11, **caractérisé en ce que** dans la zone à activité catalytique (6) on utilise un catalyseur tel que Pt, Pd, Rh, Ag ou Cu pour mettre en réaction le mélange d'hydrogène et d'oxygène.

13. Procédé selon la revendication 12, **caractérisé en ce qu'**en tant que zone à activité catalytique (6) on utilise dans l'évacuation de gaz des tubes en acier inoxydable revêtus intérieurement avec un catalyseur tel que Pt, Pd, Rh, Ag ou Cu.

14. Procédé selon la revendication 12, **caractérisé en ce qu'**en tant que zone à activité catalytique (6) on utilise dans l'évacuation de gaz un garnissage de corps de remplissage contenant un catalyseur tel que Pt, Pd, Rh, Ag ou Cu.

15. Procédé selon la revendication 14, **caractérisé en ce que** le garnissage consiste en un lit irrégulier de corps de remplissage revêtus de Pt, Pd, Rh, Ag ou Cu, en particulier en des billes, des cylindres creux ou pleins, ayant un diamètre de 0,1 à 10 mm ; ou en des feuilles d'acier inoxydable revêtues de Pt, Pd, Rh, Ag ou Cu.

16. Procédé selon l'une quelconque des revendications 1 à 15, **caractérisé en ce que** le liquide porteur pratiquement exempt de gaz est recyclé ou mis en circuit pour l'absorption d'autres gaz.

17. Dispositif pour l'élimination combinée d'au moins deux gaz qui forment entre eux des mélanges inflammables et/ou explosifs, à partir d'un liquide porteur inerte vis-à-vis des gaz, et pour la réaction totale contrôlée de ces gaz entre eux, comportant :
un récipient de dégazage (2) fermé qui comporte au moins un conduit d'arrivée pour le liquide porteur (1) chargé de gaz et au moins un conduit d'évacuation de gaz (3) à son extrémité supérieure, qui est raccordé à une zone de réaction qui contient un dispositif d'allumage actif pour le mélange de gaz et/ou une zone à activité catalytique (6) pour la mise en réaction des gaz séparés du liquide porteur, ainsi qu'un ou plusieurs conduits de sortie pour le liquide porteur au-dessous du conduit d'arrivée pour le liquide porteur et raccordés chacun à un tuyau de sortie (4),
**caractérisé en ce que** les tuyaux de sortie (4) sont conçus sous forme de colonne montante fermée jusqu'à un niveau d'hauteur entre la section transversale de sortie du conduit d'évacuation de gaz hors du récipient de dégazage (2) et le niveau le plus bas de la zone de réaction, et dans cette zone de niveau s'effectue un équilibrage de pression entre le conduit d'évacuation de gaz (3) et les tuyaux de sortie (4).

18. Dispositif selon la revendication 17, **caractérisé en ce qu'**il comporte en tant que tuyaux de sortie (4) des colonnes montantes en forme de siphon, dont la sortie à l'extérieur (5) se trouve au niveau de l'extrémité supérieure du récipient de dégazage (2) ou plus haut.

19. Dispositif selon l'une quelconque des revendications 17 ou 18, **caractérisé en ce que** le récipient de dégazage (2) et le conduit d'évacuation pour le liquide porteur pratiquement exempt de gaz ont une disposition concentrique.

20. Dispositif selon l'une quelconque des revendications 17 à 19, **caractérisé en ce que** l'évacuation de gaz consiste en un ou plusieurs conduits d'évacuation de gaz (3) qui comportent chacun une zone à activité catalytique (6) ainsi qu'une zone catalytiquement inerte avant celle-ci à la suite immédiate du dégazeur.

21. Dispositif selon la revendication 20, **caractérisé en ce** la zone catalytiquement inerte dans les tubes d'évacuation de gaz contient un garnissage de corps solides perméables aux gaz, qui agit en tant que séparateur de gouttes pour le mélange de gaz séparé, de préférence un garnissage selon la revendication 7.

22. Dispositif selon l'une quelconque des revendications 17 à 21, **caractérisé en ce que** la zone catalytiquement active (6) contient un catalyseur au Pt, Pd, Rh, Ag ou Cu.

23. Dispositif selon la revendication 22, **caractérisé en ce que** le catalyseur est constitué d'un lit irrégulier de corps de remplissage, en particulier de billes, de cylindres creux ou pleins, ayant un diamètre de 0,1 à 10 mm, revêtus de catalyseur, ou de feuilles d'acier inoxydable revêtues de catalyseur.

24. Dispositif selon la revendication 23, **caractérisé en ce que** la zone à activité catalytique (6) d'un tube d'évacuation de gaz consiste en un tube en acier inoxydable dont la face interne est revêtue de Pt, Pd, Rh, Ag ou Cu.

25. Dispositif selon l'une quelconque des revendications 17 à 24, **caractérisé en ce qu'**au voisinage de la zone à activité catalytique (6) il comporte un dispositif destiné à la thermostatation (7).

26. Dispositif selon l'une quelconque des revendications 17 à 25, **caractérisé en ce que** le récipient de dégazage (2) contient des inserts et :ou un garnissage à grande surface spécifique.

27. Utilisation d'un dispositif selon les revendications 17 à 26, pour le dégazage du concentré de modules d'électrodésionisation.

28. Utilisation d'un dispositif selon les revendications 17 à 26, pour le mélange et la mise en réaction subséquente de mélanges inflammables et/ou explosifs de gaz.

29. Utilisation selon la revendication 28, en tant que générateur de vapeur, en particulier en tant que générateur de vapeur très pure.
